(19) Europäisches Patentamt / European Patent Office / Office européen des brevets

(11) **EP 4 418 821 A1**

(12) **EUROPEAN PATENT APPLICATION**

(43) Date of publication:
**21.08.2024 Bulletin 2024/34**

(21) Application number: **24157645.3**

(22) Date of filing: **14.02.2024**

(51) International Patent Classification (IPC):
**H05B 6/80** (2006.01)    **B64D 15/12** (2006.01)

(52) Cooperative Patent Classification (CPC):
**H05B 6/80; B64D 15/12;** H05B 2214/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.02.2023 US 202318168836**

(71) Applicant: RTX Corporation
**Farmington, CT 06032 (US)**

(72) Inventors:
- GOK, Gurkan
  **Farmington, 06032 (US)**
- ZACCHIO, Joseph
  **Farmington, 06032 (US)**
- MANTESE, Joseph V.
  **Farmington, 06032 (US)**
- AZZI, Sharbel Elias
  **Farmington, 06032 (US)**

(74) Representative: **Dehns**
**St. Bride's House**
**10 Salisbury Square**
**London EC4Y 8JD (GB)**

(54) **POWER BEAMING OF MICROWAVE RADIATION FOR ANTI-ICING**

(57)    A system and method of regulating ice formation at the platform (100). The system includes an electromagnetic source (112) at a first location (108) on the platform (100) configured to generate a radio frequency wave and a waveguide (106) extending from the first location (108) to a second location (110) of the platform (100). A processor is configured to control operation of the electromagnetic source (112) to generate a radio frequency wave. The radio frequency wave propagates along the waveguide (106). Power from the radio frequency wave regulates ice formation at a selected location along the waveguide (106).

FIG. 1

EP 4 418 821 A1

**Description**

BACKGROUND

Exemplary embodiments pertain to the art of heating systems and, more particularly, to ice prevention and melting using guided radio frequency waves.

Current anti-icing and de-icing systems in aircraft primarily use bleed air from engine exhaust or thermal heating of a resistive mat. Both techniques are energy inefficient and have a large size, weight, and power requirements. Accordingly, more efficient methods for anti-icing and de-icing are desired.

BRIEF DESCRIPTION

Disclosed is a method of regulating an ice formation on a platform. A radio frequency wave is generated at a first location on the platform. The radio frequency wave is propagated through a waveguide extending from the first location to a second location of the platform. Ice formation is regulated at a selected location along the waveguide using power transmitted from the first location to the second location via the radio frequency wave.

In addition to one or more of the features described herein, the frequency of the radio frequency wave is in a range between about 20 GHz and about 200 GHz.

In addition to one or more of the features described herein, regulating the ice formation includes one of: (i) melting ice at the selected location; and (ii) preventing the ice formation at the selected location.

In addition to one or more of the features described herein, the waveguide is a microwave stripline having a gap through which the radio frequency wave propagates and an energy of the radio frequency wave extends from the gap, the method further including controlling a vertical location of a focal point at which the energy of the radio frequency wave extending the gap converges by selecting the frequency of the radio frequency wave.

In addition to one or more of the features described herein, the method further includes monitoring a scattering parameter of the radio frequency wave, detecting a presence of a foreign object along the waveguide from the scattering parameter, and controlling a generation of the radio frequency wave when the foreign object is detected along the waveguide.

In addition to one or more of the features described herein, a rotating component is at the selected location, the method further including transmitting the radio frequency wave from the waveguide through the rotating component.

In addition to one or more of the features described herein, the method further includes passing the radio frequency wave through a horn in a gap between the waveguide and the rotating component.

In addition to one or more of the features described herein, the method further includes synchronizing a generation of the radio frequency wave with a rotation of the rotating component.

Also disclosed is a system for regulating ice formation at a platform. The system includes an electromagnetic source at a first location on the platform configured to generate a radio frequency wave, a waveguide configured to propagate the radio frequency wave from the first location to a second location of the platform, and a processor configured to control operation of the electromagnetic source to generate the radio frequency wave to regulate the ice formation at a selected location along the waveguide.

In addition to one or more of the features described herein, the frequency of the radio frequency wave is in a range between about 20 GHz and about 200 GHz.

In addition to one or more of the features described herein, the selected location is at least one of a fan of an engine, a compressor of an engine, a turbine blade of an engine, a leading edge of an airplane wing, a nacelle of an airplane, and a rotor blade of a helicopter.

In addition to one or more of the features described herein, the waveguide is a microwave stripline having a gap through which the radio frequency wave propagates and an energy of the radio frequency extends from the gap and the processor is further configured to control a vertical location of a focal point at which the energy of the radio frequency wave converges by selecting the frequency of the radio frequency wave.

In addition to one or more of the features described herein, the system further includes a sensor configured to measure a scattering parameter of the waveguide and the processor is further configured to monitor the scattering parameter of the radio frequency wave, detect a presence of a foreign object along the waveguide from the scattering parameter, and control the electromagnetic source when the foreign object is detected along the waveguide.

In addition to one or more of the features described herein, the system further includes a rotating component at the selected location along the waveguide, wherein the radio frequency wave is transmitted from the waveguide through the rotating component.

In addition to one or more of the features described herein, the system further includes a horn in a gap between the waveguide and the rotating component.

In addition to one or more of the features described herein, the processor is further configured to synchronize a generation of the radio frequency wave with a rotation of the rotating component.

Also disclosed is a de-icing system of an aircraft. The de-icing system includes an electromagnetic source at a first location configured to generate a radio frequency wave, a waveguide configured to propagate the radio frequency wave from the first location to a second location of the aircraft, and a processor configured to control operation of the electromagnetic source to generate the radio frequency wave to regulate ice formation at a selected location along the waveguide.

In addition to one or more of the features described herein, the electromagnetic source is configured to generate the radio frequency wave within a frequency range between about 20 GHz and about 200 GHz.

In addition to one or more of the features described herein, the waveguide is a microwave stripline having a gap through which the radio frequency wave propagates and wherein an energy of the radio frequency wave extends from the gap and the processor is further configured to control a vertical location of a focal point at which the energy of the radio frequency wave converges by selecting the frequency of the radio frequency wave.

In addition to one or more of the features described herein, the de-icing system further includes a rotating component at the selected location along the waveguide, wherein the radio frequency wave is transmitted from the waveguide through the rotating component.

BRIEF DESCRIPTION OF THE DRAWINGS

The following descriptions should not be considered limiting in any way. With reference to the accompanying drawings, like elements are numbered alike:

FIG. 1 shows a platform that includes a guided electromagnetic transmission network, in an illustrative embodiment;

FIG. 2 depicts a detailed view of the guided electromagnetic transmission network of the platform, in an illustrative embodiment;

FIG. 3 is plot showing various absorption spectra;

FIG. 4 shows a perspective view of a microwave stripline that is suitable for use as the waveguide branch 104, in an illustrative embodiment;

FIG. 5 is a side view of the microwave stripline as viewed along the z-axis;

FIG. 6 is a diagram for understanding a relation between energy transmission and reflection and scattering parameters; and

FIG. 7 shows a rotational system suitable for delivery of a radio frequency wave for power transfer.

DETAILED DESCRIPTION

A detailed description of one or more embodiments of the disclosed apparatus and method are presented herein by way of exemplification and not limitation with reference to the Figures.

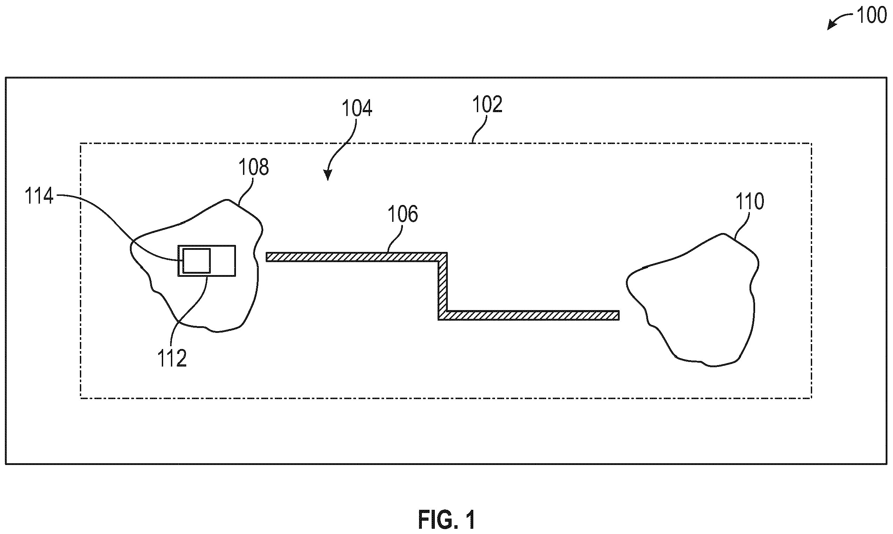

FIG. 1 shows a platform 100 that includes a guided electromagnetic transmission network 102, in an illustrative embodiment. In various embodiments, the platform 100 can be an aircraft, such as an airplane or rotary aircraft, or a component of an aircraft, such as an engine, nacelle, wing section, etc. In other embodiments, the platform 100 can also be a building, or automotive vehicle, such as a car, automobile, truck, semi, SUV, motorcycle, etc. In an embodiment, the platform 100 can be a surface of an aircraft and the guided electromagnetic transmission network 102 is a de-icing system of the aircraft. In alternative embodiments, the surface can be fan of an engine, a compressor of an engine, a turbine blade of an engine, a leading edge of an airplane wing, a nacelle of an airplane, a rotor blade of a helicopter, etc.

A waveguide branch 104 of the guided electromagnetic transmission network 102 is shown for illustrative purposes. The waveguide branch 104 can be used as a de-icing system to remove ice from a section or surface of the platform 100. The waveguide branch 104 includes a waveguide 106 that is used to propagate an electromagnetic wave from a first location 108 to a second location 110.

The first location 108 can include an electromagnetic source 112 (EM source) for generating a radio frequency wave and a controller 114 or other suitable device that includes a processor that performs various calculations concerning the electromagnetic transmission network 102 and controls operation of the electromagnetic source 112. The waveguide branch 104 can be a hollow waveguide or can be a filled waveguide, such as a waveguide filled with dielectric material. Alternatively, the waveguide branch 104 can be a slotted waveguide or microwave stripline or leaky coaxial waveguide.

It is noted that the energy of the electromagnetic wave can be used at any point between the first location 108 and the second location 110 for various purposes, such as for heating, melting ice, preventing, inhibiting, reducing or regulating ice formation, etc. In particular, any point between the first location 108 and the second location 110, including the second location 110 itself, can be at a surface at which heating is desired, such as a leading edge, or tip of a wing of an airplane, or a surface of a rotary component of an aircraft, such as a rotor blade of a helicopter. A frequency or frequency range of the electromagnetic wave can be selected based on absorption characteristics of material at the surface at which heat is desired as well as the absorption characteristics of water, as discussed herein.

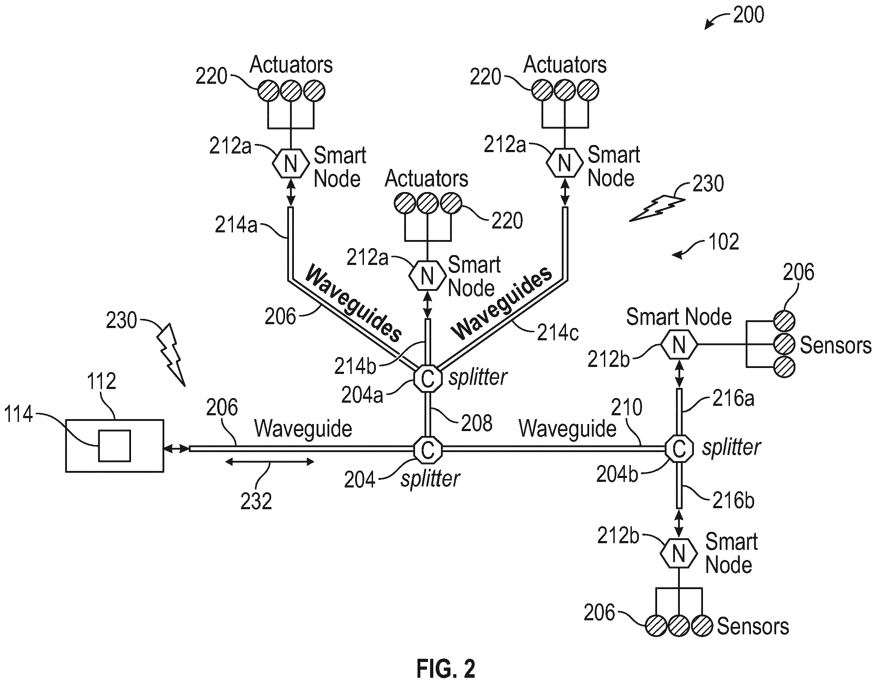

FIG. 2 depicts a detailed view 200 of the guided electromagnetic transmission network 102 of the platform 100, in an illustrative embodiment. The guided electromagnetic transmission network 102 can include the electromagnetic source 112 coupled to coupler 204 through a waveguide 206. The coupler 204 is further coupled to coupler 204a through waveguide 208 and to coupler 204b through waveguide 210. Coupler 204a is further coupled to three nodes 212a through waveguides 214a, 214b, 214c in parallel. Each of the nodes 212a can interface or be combined with multiple actuators 220. Coupler 204b is also coupled to two nodes 312b through waveguides 216a, 216b in parallel. Each of the nodes 212b can interface or be combined with multiple sensors 224. Although the example of FIG. 2 depicts connections to actuators 220 and sensors 222 isolated to different branches, it will be understood that actuators 220 and sensors 222 can be interspersed with each other and need not be isolated on dedicated branches of the guided electromagnetic transmission network 102. Couplers 204, 204a, 204b can be splitters and/or can incorporate instances of a radio frequency-based repeater. Further, one or more instances of the radio frequency-based repeater can be installed at any of the waveguides 206, 208, 210, 214a-c, and/or 216a-b depending on the signal requirements of the guided electromagnetic transmission network 102.

The controller 114 can send and receive power and data to and from the nodes 212a, 212b. The controller 114 may be located on equipment near other system components or located remotely as desired to meet application requirements.

A transmission path (TP) between the electromagnetic source 112 and nodes 212a, 212b can be used to send and receive data routed through the controller 114 from a control module or other components. The TP may utilize electrical wire, optic fiber, waveguide or any other electromagnetic communication including radio frequency/microwave electromagnetic energy, visible or non-visible light. The interface between the controller 66 and nodes 68a, 68b can transmit power and signals.

The example nodes 212a, 212b may include radio-frequency identification devices along with processing, memory and/or the interfaces to connect to conventional sensors or actuators, such as solenoids or electro-hydraulic servo valves. The waveguides 206, 208, 210, 214a-c, and/or 216a-b can be shielded paths that support electromagnetic communication, including, for instance, radio frequency, microwaves, magnetic or optic waveguide transmission. Shielding can be provided such that electromagnetic energy or light or other intentional interference 230 with electromagnetic signals 232 (shown schematically as arrows) are mitigated in the guided electromagnetic transmission network 102. Moreover, the shielding provides that the electromagnetic signals 232 are less likely to propagate into the environment outside the guided electromagnetic transmission network 102 and provide unauthorized access to information. A carrier frequency can transmit electric power, as well as communicate information, to multiple nodes 212a, 212b using various modulation and signaling techniques. In various embodiment, a first signal having a first frequency is used for communication with one node while a second signal having a second frequency is used for communication with another node. Splitters and repeaters of the guided electromagnetic transmission network 102 can be used to direct the signals based on their frequencies.

The nodes 212a with actuators 220 may include control devices, such as a solenoid, switch or other physical actuation devices. Radio frequency identification, electromagnetic or optical devices implemented as the nodes 212b with sensors 222 can provide information indicative of a physical parameter, such as pressure, temperature, speed, proximity, vibration, identification, and/or other parameters used for identifying, monitoring or controlling component operation. Signals communicated in the guided electromagnetic transmission network 102 may employ techniques such as checksums, hash algorithms, error control algorithms and/or encryption to mitigate cyber security threats and interference.

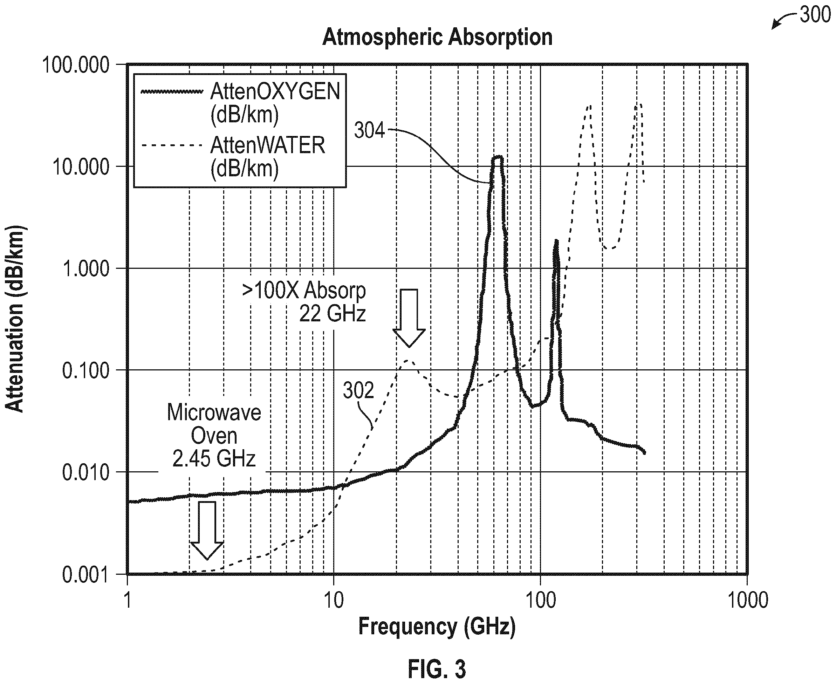

FIG. 3 is plot 300 showing various absorption spectra. Frequency is shown in Gigahertz (GHz) along the abscissa and attenuation is shown in decibels per kilometer (dB/km) along the ordinate axis. Curve 302 shows an absorption spectrum for water. Curve 304 shows an absorption spectrum for air. The frequency of the electromagnetic wave is selected to be within a range in which the water is the dominant absorber. Given the absorption spectra, the controller 114 can select the frequency range as appropriate to cause ice regulation at the second location 110, such as by melting ice or by preventing ice formation. In various embodiments, the frequency range is between about 20 GHz and about 200 GHz.

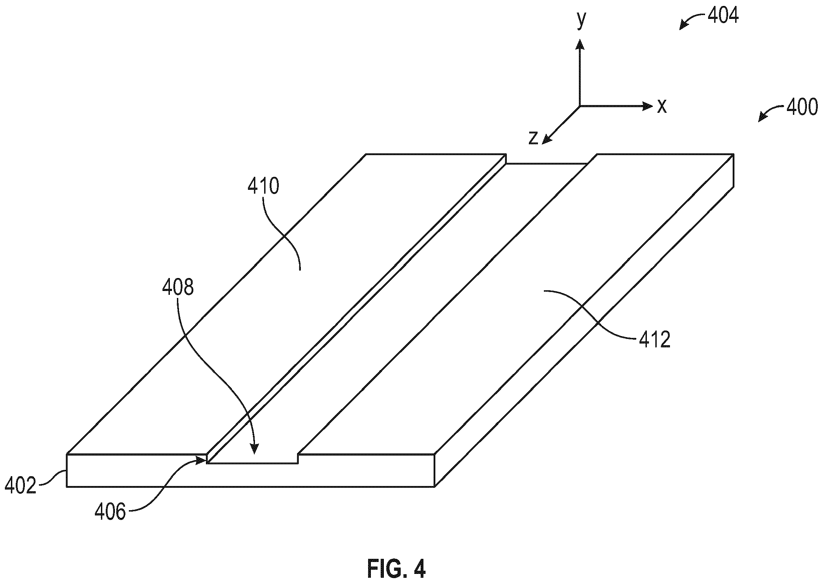

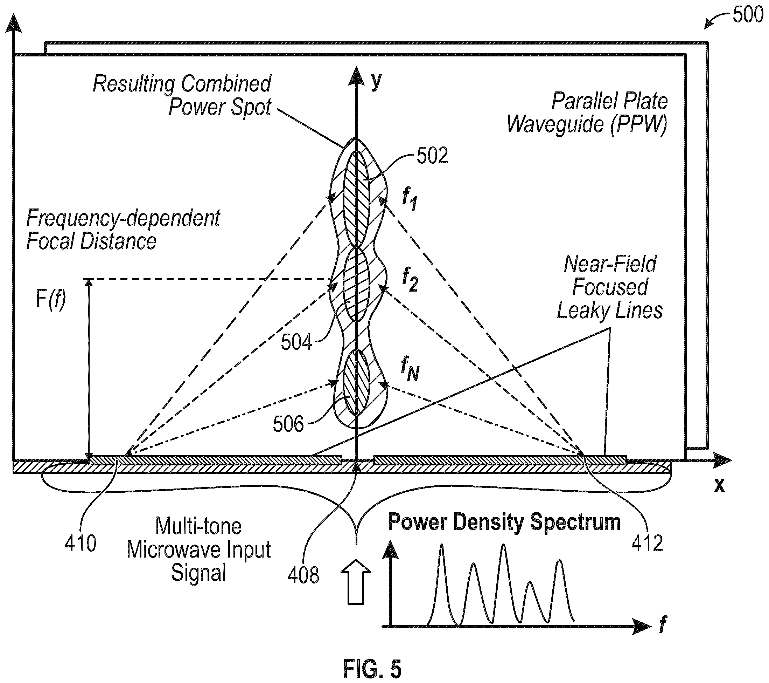

FIG. 4 shows a perspective view of a microwave stripline 400 that is suitable for use as the waveguide branch 104, in an illustrative embodiment. The microwave stripline 400 includes a substrate 402. A coordinate system 404 is shown for the microwave stripline 400, with an x-z plane of the coordinate system 404 located at the top surface of the substrate 402 and the +y-axis extending perpendicularly away from the substrate 402. The substrate 402 includes a gap 406 that extends axially along the z-axis. The gap 406 includes an aperture 408 at the top surface of the substrate 420. An electromagnetic wave travels along the z-axis within the gap 406. As the electromagnetic wave propagates along the z-axis, an energy of the electromagnetic wave can extend outside of (or leak from) the gap 406 in the direction of the +y-axis. Electrodes 410 and 412 supply a voltage that helps to confine the electromagnetic wave within the gap 406. The leaked portion of the electromagnetic wave can be focused along the y-axis at a focal point, thereby concentrating its energy at the focal point. The location of the focal point is based on at least one of a gap size or gap width and a frequency of the electromagnetic wave. Thus, the location of the focal point can be controlled by selecting a frequency for the electromagnetic wave, as discussed with respect to FIG. 5.

FIG. 5 is a side view 500 of the microwave stripline 400 as viewed along the z-axis. The aperture 408 of the gap 406 is located along the x-axis (at y=0). The electromagnetic wave extends outside of the gap along the +y direction and converges at a focal point along the y-axis. The focal point is a location of maximum power density for the electromagnetic wave. The location of the focal point is dependent on a frequency of the electromagnetic wave. For example, A radio frequency wave having a first *frequency* $f_1$ is focused at a first focal point 502, a radio frequency wave having a second frequency $f_2$ is focused at a second focal point 504, and a radio frequency wave having an N$^{th}$ *frequency* $f_N$ is focused at an $N^{th}$ focal point 506. The frequencies $f_1$, $f_2$, ..., $f_N$ are increasing with the frequency index. As can be seen in FIG. 5, as the frequency of the radio frequency wave increases, the location of the focal point moves closer to the aperture, generally along the y-axis.

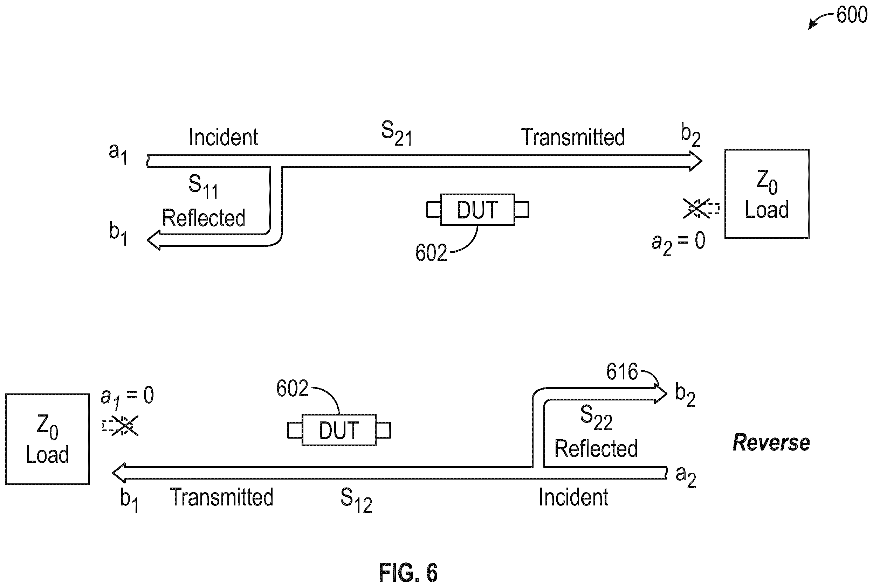

The focal point can be placed at a desired vertical location along the +y axis to provide heat at the desired location by selecting a frequency of the electromagnetic wave. The heat can be used for ice melting or ice prevention at the desired location. In various embodiments, the frequency of the radio frequency wave can be cycled through a frequency range to move the focal point (and therefore, the spot of maximum heating) through a range of locations. As discussed with respect to FIG. 6, a scattering parameter for the electromagnetic wave can be measured at the controller 114 to determine a presence of a foreign object at a location and can control the frequency of the radio frequency wave to adjust the location of a focal point along the +y axis to avoid heating the foreign object.

FIG. 6 is a diagram 600 for understanding a relation between energy transmission and reflection and scattering parameters. The scattering parameters can be calculated and used to detect a presence of a foreign object at a given distance from the microwave stripline 400. Incident energies $a_1$ and $a_2$ represent energy incident at a device under test 602 along the waveguide from a first side (e.g., from the first location 108) and a second side (e.g., from the second location 110), respectively. Exit parameters $b_1$ and $b_2$ represent energy the waveguide exiting the waveguide at the first side and the second side, respectively. These energies are related by scattering parameters (S parameters) as shown in Eq. (1):

$$\begin{pmatrix} b_1 \\ b_2 \end{pmatrix} = \begin{pmatrix} S_{11} & S_{12} \\ S_{21} & S_{22} \end{pmatrix} \begin{pmatrix} a_1 \\ a_2 \end{pmatrix} \qquad \text{Eq. (1)}$$

where $S_{11}$, $S_{12}$, $S_{21}$ and $S_{22}$ are the scattering parameters.

In one mode of operation, energy is incident at the device under test 602 only from the first side. In this mode, the non-zero scattering parameters can be written as shown in Eqs. (2) and (3):

$$S_{11} = \frac{b_1}{a_1} \qquad \text{Eq. (2)}$$

$$S_{21} = \frac{b_2}{a_1} \qquad \text{Eq. (3)}$$

In another mode of operation, energy is incident at the device under test 602 from the second side. In this mode, the non-zero scattering parameters can be written as shown in Eqs. (4) and (5):

$$S_{22} = \frac{b_2}{a_2} \qquad \text{Eq. (2)}$$

$$S_{12} = \frac{b_1}{2} \qquad\qquad \text{Eq. (3)}$$

Sensors can be located at the first location 108 to measure both incident energy and reflected energy, therefore calculating $S_{11}$ parameter $S_{21}$. A change in the scattering parameter can indicate that a foreign object has become present at a location along the waveguide. The controller 114 can thus control the EM source to change a location of the focal point of energy along the y-axis, or to stop the generation of EM waves altogether. Similarly, a sensor or smart node at the second location 110 can be used to measure relevant energy parameters at the second location 110. The measurements can be sent to the processor at the first location 108 to determine relevant scattering parameters. Alternatively, the smart node can determine the scattering parameters parameter calculations.

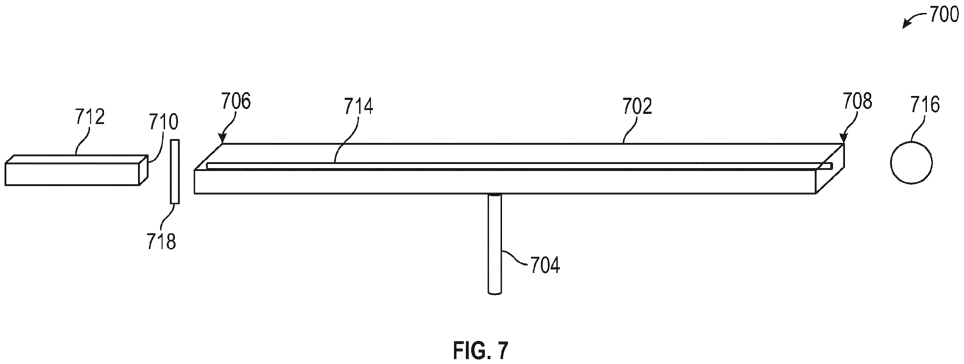

FIG. 7 shows a rotational system 700 suitable for delivery of a radio frequency wave for power transfer. The rotational system 700 includes a rotational component. For illustrative purposes, the rotational component can be a rotor blade 702 of an aircraft. In other embodiments, the rotational component can be a compressor, a turbine blade or other rotating element of an aircraft engine. The rotor blade 702 rotates about a rotor shaft 704 and has a first blade end 706 and a second blade end 708. An end 710 of an EM waveguide 712 is located at a circumference of an arc made by rotation of the rotor blade 702. In an embodiment, the EM waveguide 712 can be a microwave stripline and the circumference of the arc made by rotation of the rotor blade 702 can pass through a location along the EM waveguide (e.g., along the +y-axis). The rotor blade 702 has a bore 714 passing therethrough, generally along a radial line of the rotor blade 702. As either the first blade end 706 or the second blade end 708 moves in front of the end 710 of the waveguide, the bore 714 is aligned with an axis of the EM waveguide 712 and an EM signal exiting the EM waveguide 712 is transmitted into the bore 714 of the rotor blade 702. The rotor blade 702 and its bore 714 can thus be used as a waveguide. The EM signal is transmitted through the bore 714 to perform melting or prevent ice formation at a location 716 opposite the EM waveguide 712. In various embodiments, an EM source that transmits the radio frequency wave into the EM waveguide 712 can be synchronized with the rotation of the rotor blade 702. Specifically, the EM source can be synchronized to generate EM pulses timed such that they appear at the end 710 of the EM waveguide 712 as one of the first blade end 706 and second blade end 708 passes across the end 710 or aperture of the EM waveguide 712 and then turns off the EM pulses once one of the first blade end 706 and second blade end 708 moves out of the way of the end 710.

A RF focusing element 718, such as lens or horn, can be used to transfer radio frequency power across a gap between the aperture and rotor blade, thereby affecting power transfer across the rotating component.

In another embodiment, the RF energy can be transmitted through the rotor shaft 704 and into the rotor blade 702 via a bore in the rotor shaft and a central bore of the rotor blade 702. The RF energy can then propagates along the bore 714 to first blade end 706 and second blade end 708.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

**Claims**

1. A method of regulating an ice formation on a platform (100), comprising:

   generating a radio frequency wave at a first location (108) on the platform (100);
   propagating the radio frequency wave through a waveguide (106) extending from the first location (108) to a second location (110) of the platform (100); and

regulating the ice formation at a selected location along the waveguide (106) using power transmitted from the first location (108) to the second location (110) via the radio frequency wave.

2. The method of claim 1, wherein regulating the ice formation comprises one of: (i) melting ice at the selected location; and (ii) preventing the ice formation at the selected location.

3. The method of claim 1 or 2, further comprising monitoring a scattering parameter of the radio frequency wave, detecting a presence of a foreign object along the waveguide (106) from the scattering parameter, and controlling a generation of the radio frequency wave when the foreign object is detected along the waveguide (106).

4. The method of any of claims 1 to 3, wherein a rotating component (702) is at the selected location (716), further comprising transmitting the radio frequency wave from the waveguide (106) through the rotating component (702).

5. The method of claim 4, further comprising passing the radio frequency wave through a horn in a gap between the waveguide (106) and the rotating component (702).

6. The method of claim 4 or 5, further comprising synchronizing a generation of the radio frequency wave with a rotation of the rotating component (702).

7. A system for regulating ice formation at a platform (100), comprising:

an electromagnetic source (112) at a first location (108) on the platform (100) configured to generate a radio frequency wave;
a waveguide (106) configured to propagate the radio frequency wave from the first location (108) to a second location (110) of the platform (100); and
a processor configured to control operation of the electromagnetic source (112) to generate the radio frequency wave to regulate the ice formation at a selected location along the waveguide (106).

8. The system of claim 7, wherein the selected location is at least one of: (i) a fan of an engine; (ii) a compressor of the engine; (ii) a turbine blade of the engine; (iv) a leading edge of an airplane wing; (v) a nacelle of an airplane; (vi) rotor blade of a helicopter.

9. The system of claim 7 or 8, further comprising a sensor configured to measure a scattering parameter of the waveguide (106), and wherein the processor is further configured to monitor the scattering parameter of the radio frequency wave, detect a presence of a foreign object along the waveguide (106) from the scattering parameter, and control the electromagnetic source (112) when the foreign object is detected along the waveguide (106).

10. The system of any of claims 7 to 9, further comprising a rotating component (702) at the selected location (716) along the waveguide (106), wherein the radio frequency wave is transmitted from the waveguide (106) through the rotating component (702).

11. The system of claim 10, further comprising a horn in a gap between the waveguide (106) and the rotating component (702).

12. The system of claim 10 or 11, wherein the processor is further configured to synchronize a generation of the radio frequency wave with a rotation of the rotating component (702).

13. The system of any of claims 7 to 12, wherein the system is a de-icing system of an aircraft.

14. The method or system of any preceding claim, wherein the frequency of the radio frequency wave is in a range between about 20 GHz and about 200 GHz.

15. The method or system of any preceding claim, wherein the waveguide (106) is a microwave stripline (400) having a gap (406) through which the radio frequency wave propagates and an energy of the radio frequency extends from the gap (406) and the processor is further configured to control a vertical location of a focal point (502, 504, 506) at which the energy of the radio frequency wave converges by selecting the frequency of the radio frequency wave.

**FIG. 1**

EP 4 418 821 A1

**FIG. 2**

FIG. 3

**FIG. 4**

**FIG. 5**

EP 4 418 821 A1

FIG. 6

EP 4 418 821 A1

**FIG. 7**

EP 4 418 821 A1

Europäisches
Patentamt

European
Patent Office

Office européen
des brevets

# EUROPEAN SEARCH REPORT

**Application Number**

EP 24 15 7645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/129997 A1 (KESTLER STEVEN M [US] ET AL) 6 May 2021 (2021-05-06) * paragraph [0001] * * paragraph [0051] - paragraph [0058]; figure 4 * * paragraph [0068]; figure 9 * | 1-3,7-9, 13,15 | INV. H05B6/80 B64D15/12 |
| X | EP 4 112 449 A1 (ROHR INC [US]) 4 January 2023 (2023-01-04) * paragraph [0001] * * paragraph [0006] * * paragraph [0010] * * paragraph [0025] * * paragraph [0054] - paragraph [0056]; figure 1 * | 1,2,8, 13-15 | |
| X | US 2015/083863 A1 (KARTHÄUSER JOACHIM [SE] ET AL) 26 March 2015 (2015-03-26) * paragraph [0001] * * paragraph [0030]; figure 2 * | 1,4-7, 10-12 | |

**TECHNICAL FIELDS SEARCHED (IPC)**

H05B
B64D

The present search report has been drawn up for all claims

| Place of search | Date of completion of the search | Examiner |
|---|---|---|
| Munich | 1 July 2024 | Barzic, Florent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                        
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 7645

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2024

| Patent document cited in search report | | Publication date | Patent family member(s) | | Publication date |
|---|---|---|---|---|---|
| US 2021129997 | A1 | 06-05-2021 | EP | 3819220 A1 | 12-05-2021 |
| | | | US | 2021129997 A1 | 06-05-2021 |
| EP 4112449 | A1 | 04-01-2023 | EP | 4112449 A1 | 04-01-2023 |
| | | | US | 2023002065 A1 | 05-01-2023 |
| US 2015083863 | A1 | 26-03-2015 | CA | 2873679 A1 | 21-11-2013 |
| | | | CN | 104507809 A | 08-04-2015 |
| | | | EP | 2850000 A1 | 25-03-2015 |
| | | | US | 2015083863 A1 | 26-03-2015 |
| | | | WO | 2013172762 A1 | 21-11-2013 |

EPO FORM P0459

For more details about this annex : see Official Journal of the European Patent Office, No. 12/82